# EUROPEAN PATENT APPLICATION

(11) **EP 1 622 152 A1**
(43) Date of publication of application: **01.02.2006**
(21) Application number: 05106899.7
(22) Date of filing: 27.07.2005
(51) Int. Cl.: G11B 27/034, G11B 27/10, G11B 27/32, G11B 20/12

(54) **Optical disc, apparatus and method for recording and reproducing information, and apparatus and method for reproducing information**

(30) Priority: 30.07.2004 JP 2004224138
(71) Applicant: Kabushi Kaisha Toshiba, Tokyo 105-8001 (JP)
(72) Inventor: OGAWA, Akihito, 105-8001, Tokyo (JP); NODA, Chosaku, 105-8001, Tokyo (JP); SATO, Hiroharu, 105-8001, Tokyo (JP)
(74) Representative: Henkel, Feiler & Hänzel

(57) **Abstract**

When an information recording and reproducing apparatus records pieces of user data (# 1 and # 2) on a write-once optical disk on which information can additionally be written, the information recording and reproducing apparatus performs a closing process so that the pieces of user data (# 1 and # 2) can also be reproduced with the reproduction-only apparatus.
The closing process includes recording final recording position information NBM (A1) indicating an end position of the recorded information in the outside of the user data # 2. Then, in the case where user data # 3 is additionally written, the final recording position information NBM (A1) is erased using a predetermined pattern through the closing process, and the new final recording position information NBM (B1) is recorded in a rear position of the user data # 3.

## Description

The present invention relates to an optical disk on which information can be recorded using a laser beam, an information recording and reproducing apparatus which records and reproduces the information on and from the optical disk, and an information reproducing apparatus which reproduces the information recorded on the optical disk. Particularly the invention relates to a method of confirming an information recording state of a write-once (recordable) disk.

As is well known, recently an optical disk having a capacity of 4.7 GB in one layer on one side has become commercially practicable as an optical disk on which information can be recorded at high density. Particularly, the market has rapidly expanded for DVD-R (ECMA-279) and DVD+R (ECMA-349), which are write-once media.

In these optical disks, an information recording layer is formed on a transparent substrate, and the laser beam is focused on the information recording layer, which allows the information to be recorded and reproduced. The information recording layer in the optical disk has a track referred to as guide groove which is means for recording and reproducing the information. The information is recorded and reproduced along the guide groove. A physical address is formed on the track in order to determine a position where the information is recorded and reproduced.

In addition to user data (contents such as programs recorded under the direction of a user), the information recorded in the disk includes management data indicating the position and the contents in which the user data is recorded. In a reproduction-only disk in which the recording capacity is previously known at the time of recording, and in a rewritable disk in which the information can be rewritten after the information is recorded, usually the management data indicating the user data recording state is recorded on an inner radius side of the disk. Accordingly, the user data final recording position and the like can be recognized at the stage in which the inner radius side of the disk is reproduced. Conversely, since the recording data cannot be rewritten in the write-once disk, the management data recorded once in the inner radius side cannot be updated. Therefore, the recording position of the latest (last) management information is not unknown, the outermost radius of the user data is not determined. As a result, in order to determine the outermost radius position, it is necessary that the reproduction is performed to the end to determine that a time when servo is disabled is set at the outermost radius.

In contrast, in Jpn. Pat. Appln. KOKAI Publication No. 9-16966, "data indicating the end of the recording data" is arranged in the outermost radius of the recording data such as the user data, and the end of the recording data can be confirmed before the servo is disabled by indicating the end of the data. However, when the data is additionally written later, a specific method how the "data indicating the end of the recording data" is dealt with is not described. Namely, the specific method of additionally writing the data is not shown.

In the write-once medium such as CD-R and DVD-R, the data cannot be rewritten. Accordingly, for example, when overwrite is performed, the problem is generated in reading the continuous pieces of data, so that the method disclosed in Jpn. Pat. Appln. KOKAI Publication No. 9-16966 cannot be adopted. In DVD-R, instead of the method disclosed in Jpn. Pat. Appln. KOKAI Publication No. 9-16966, a part of the recording data of one ECC BLOCK which is the minimum recording unit is left blank while the recording is not performed, which defines next border marker (NBM) indicating the end of the recording data. On the other hand, in the case of the reproduction-only optical disk apparatus, when a blank in one ECC BLOCK exists, the tracking is disabled.

Thus, when the servo is disabled while the end of the data is not revealed in advance, not only does it take a long time to search and recognize the disk, but also the problems that the apparatus might be broken is generated.

In view of the foregoing, an object of the invention is to provide an optical disk, an optical disk reproducing apparatus, an optical disk recording apparatus, an optical disk reproducing method, and an optical disk recording method, in which the information indicating the end of the recording data can be recorded and changed to the write-once medium while the servo signal is maintained and the recording data is stably read.

An information recording and reproducing apparatus according to one embodiment of the present invention comprises: an optical pickup which focuses a laser beam onto an information recording surface of an optical disk to record and reproduce information; an unit which records first user data on a write-once optical disk using the optical pickup, the information being additionally written on the write-once optical disk; an unit which records first final recording position information (NBM) which indicates an end position of the recorded information in the outside of the first user data using the optical pickup; an unit which records second user data on the write-once optical disk; an overwriting unit which overwrites a predetermined pattern over the first final recording position information (NBM); and an unit which records second final recording position information (NBM) which indicates the end position of the recorded information in the outside of the second user data.

An optical disk, an optical disk reproducing apparatus, an optical disk recording apparatus, an optical disk reproducing method, and an optical disk recording method, in which the information indicating the end of the recording data can be recorded and changed to the write-once medium while the servo signal is maintained and the recording data is stably read, are provided.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a write-once optical disk according to an embodiment of the invention;
FIG. 2 shows a configuration of an optical disk recording and reproducing apparatus according to an embodiment of the invention;
FIG. 3 shows a configuration of an optical disk reproduction-only apparatus according to an embodiment of the invention;
FIG. 4 is a schematic view showing a tracking servo-signal generating apparatus for tracking a groove;
FIG. 5 is a schematic view showing a tracking servo-signal generating apparatus of a reproduction-only apparatus;
FIGS. 6A to 6E show a procedure of recording information in an optical disk with an optical disk recording apparatus;
FIGS. 7A and 7B show a procedure in which a reproducing apparatus according to the invention reproduces the information from the optical disk;
FIG. 8 shows a data structure of data recorded on the optical disk;
FIG. 9 shows a data pattern in erasing final recording position information (NBM);
FIGS. 10A to 10D show a recording pattern overwritten on NBM recorded on the write-once optical disk and a reproducing signal of the recording pattern;
FIGS. 11A to 11D show an NBM overwriting range;
FIG. 12 shows a PI error when the information recorded in a sector is erased at intervals of one sector; and
FIG. 13 shows a procedure of reproducing data after the optical disk is inserted into the reproduction-only optical disk apparatus.

Referring now to the accompanying drawings, a preferred embodiment of the invention will be described.

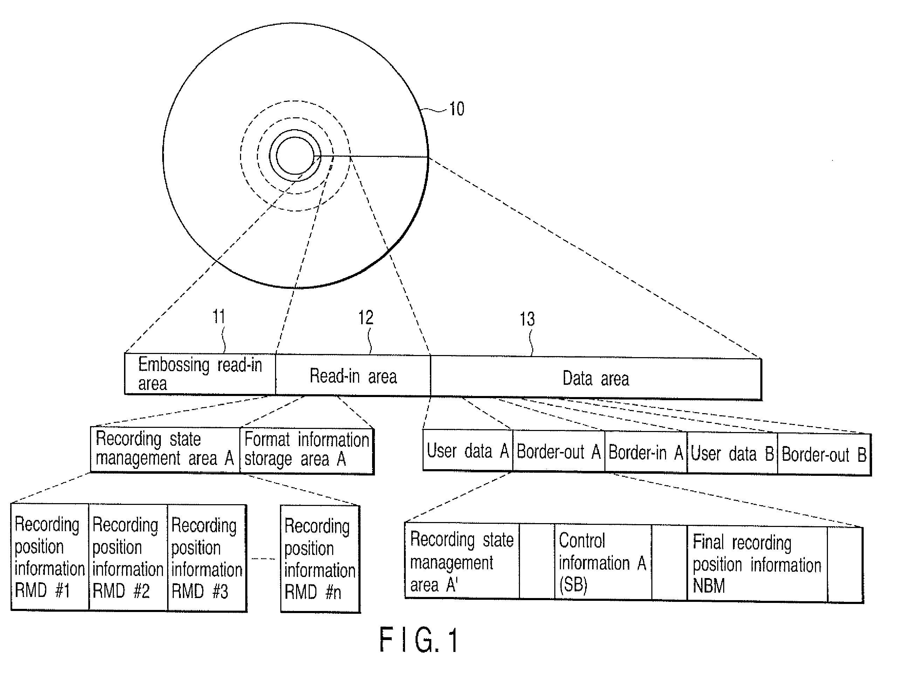

FIG. 1 shows a write-once optical disk 10 according to an embodiment of the invention, i.e., the optical disk on which information can be recorded once (the information can additionally be recorded but not rewritten or overwritten). In the optical disk 10, an information recording layer is formed on a transparent substrate, and the laser beam is focused on the information recording layer, which allows the information to be recorded and reproduced. A recording material such as an organic coloring material and a multi-layer inorganic material is used as the information recording layer. Recording pits or marks are formed by focusing the high-power laser beam on the information recording layer, allowing the information to be recorded in the optical disk 10. The recorded information such as the user data is modulated into a signal which is suitable to the optical disk recording. For example, modulation formulas such as (1,10) RLL and (2,10) RLL are applied. The substrate of the optical disk 10 has a guide groove referred to as groove track as a means for recording and reproducing the information. Recording and reproducing the information are performed along the guide groove. A physical address is previously formed in the substrate. The physical address specifies a position where the information is recorded and reproduced.

The optical disk 10 of the invention has plural areas in a radial direction, and the kind of a piece of information to be recorded in each area is previously determined. The information recording layer is mainly divided into an embossing read-in area 11 which is a reproduction-only system area, a read-in area 12 which is a recordable system area, and a data area 13 in which the user data is recorded. In the embossing read-in area 11, the information is recorded by the embossing pits, i.e. projections and depressions of the disk surface. The grooves are formed in areas other than the embossing read-in area 11.

A management area A which manages the recording state of the data area 13 is provided in the read-in area 12. Specifically the information, such as a start position address and an end position address of the data recorded in the data area 13, is recorded as recording position information. In addition, the pieces of management information such as a next recording position, a recording position of inner-radius-side and outer-radius-side learning areas, a post-learning optimum waveform information, information showing whether a protection area is used as an extended learning area or not, and a terminal position of the data area updated in changing the terminal position of the data area are recorded as necessary. Since the information cannot be overwritten on the write-once disk, these pieces of management information are recorded and updated in a collective manner (as a series of pieces of data). The series of pieces of data is generally handled in the same unit as an error correction unit. Namely, when even a part of the contents is updated, all the pieces of information are additionally written from the inner radius side toward the outer radius side of the management information recording area of the disk as appropriate.

Further, a format information storage area A is provided. Control information is recorded in the format information storage area A. The control information is utilized when the optical disk on which the data is recorded is reproduced with a reproduction-only optical disk apparatus. The information which is common with the management information recorded in the recording state management area A is also recorded in the control information. The format information storage area A also has the function as a running approach or an overrun permitting area when the reproduction-only optical disk apparatus performs tracking control to the recording pits.

The user data is recorded in the data area 13. In order to reproduce the disk on which the user data is recorded with the reproduction-only optical disk apparatus, an area referred to as a border-out area or read-out area by which the user data is followed is provided when the disk is taken from the recording apparatus. When the user data is recorded, a border-in area is provided between the border-out area and the next user data. A recording state management area A' is provided in the border-out area. The latest recording position information RMD in the recording state management area A is copied in the recording state management area A'. The final recording position information NBM (Next Border Maker) indicating the end position of the border is recorded in a predetermined position. In addition, control information A (SB) indicating the recording position of the final recording position information NBM is recorded. The border-out area has the function as the overrun permitting area when the reproduction-only optical disk apparatus performs the tracking control to the recording pits. Accordingly, dummy data and the like are inserted as the border-out aria between the pieces of effective information. The border-in area has the same function as the read-in area 12.

In the case where it is previously determined that the user data is not continuously recorded, the recording position of the user data is set to the recording position information RMD and recorded in the recording information management areas A and A'. In this case, the border-out area is also referred to as a read-out area. The information indicating the end of the user data is recorded in the read-out area, and the read-out area has the function as the overrun permitting area when the reproduction-only optical disk apparatus performs the tracking control to the recording pits.

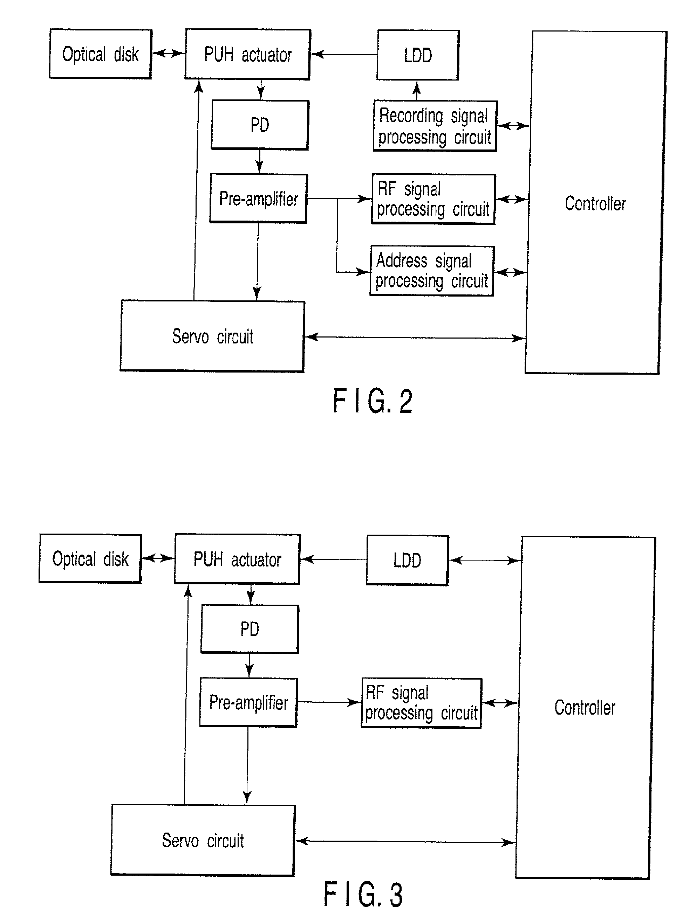

FIG. 2 shows a configuration of an optical disk recording and reproducing apparatus according to an embodiment of the invention. In the optical disk apparatus of the invention, information is recorded and reproduced by focusing the laser beam outgoing from an optical pickup (PUH) onto the information recording layer. In FIG. 2, the PUH includes an actuator which drives the PUH in an optical disk radial direction. The PUH of the recording and reproducing apparatus usually has a PP (Push-Pull) type of tracking control function which is suitable to the information recording. It is also possible that the PUH has a DPD (Differential Phase Detection) type of tracking control function.

The light reflected from the disk passes through an optical system of the PUH again, and the light is detected as an electric signal by a photodetector (PD). An output signal of the photodetector is amplified by a pre-amplifier and output to a servo circuit, an RF signal processing circuit, and an address signal processing circuit.

The servo circuit generates servo signals such as a focusing signal and a tracking signal, and the servo signals are output to a focusing actuator and a tracking actuator in the PUH respectively. The RF signal processing circuit extracts the user data and the management information from the reproduced signal. The address signal processing circuit extracts address information, and the extracted address information is output to a controller.

The controller reads the data such as the specified user data and records the user data and the management information in the desired position based on the address information. The controller can erase the information in an already-recorded portion by obtaining an access to the desired position based on the address information to overwrite the particular data in the already-recorded portion.

The signal to be recorded is modulated into a recording waveform signal suitable to the optical disk recording by a recording signal processing circuit. An LD drive circuit (LDD) causes an LD (Laser Diode) to emit light in the PUH based on the recording waveform signal, and the information is recorded on the optical disk. Besides generating the waveform for the usual data recording, the recording signal processing circuit can generate the waveform for overwriting erase. The recording signal processing circuit changes the waveforms under the direction of the controller. The RF signal processing circuit has not only the usual data reproducing function but also the later-mentioned erase data determining processing function. The RF signal processing circuit performs the erase data determining process under the direction of the controller.

FIG. 3 shows a configuration of an optical disk reproduction-only apparatus according to an embodiment of the invention. Usually, in the reproduction-only disk, the address information and the user data are simultaneously formed by the pits. Accordingly, reading the address and reproducing the data are simultaneously performed by the RF signal processing circuit. Configurations other than the recording function are similar to the recording and reproducing apparatus. However, in the reproduction-only apparatus, it is assumed that generally the tracking control is performed only to the embossing pits. Therefore, generally the reproduction-only apparatus does not have the PP type of tracking control function, but has only the DPD type of tracking control function.

Then, a tracking control method in the recording apparatus will be described.

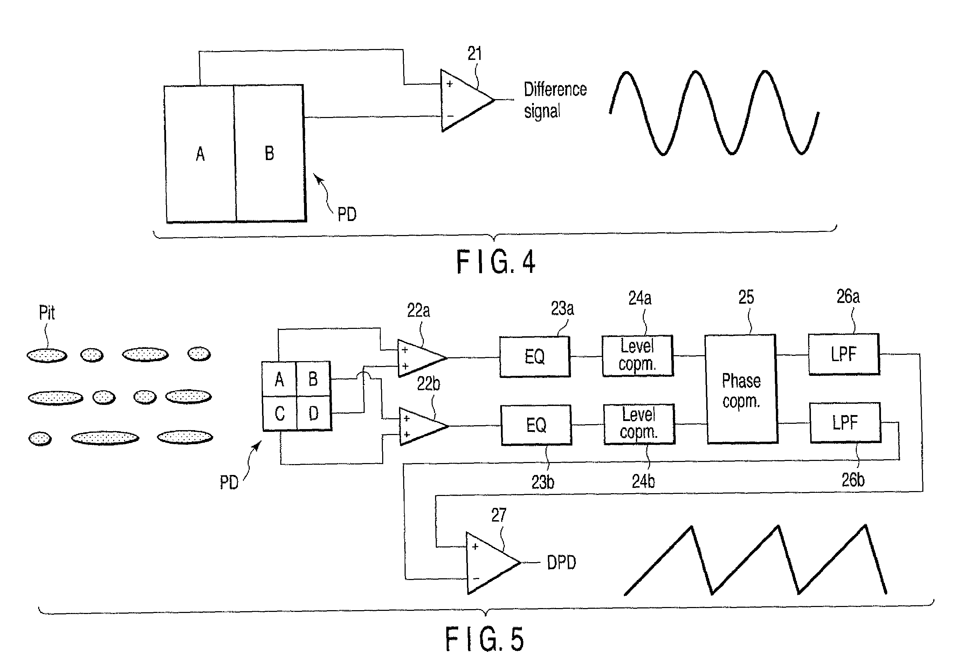

In the recording apparatus, since the beam is scanned along the optical disk groove, as described above, usually the PP type of tracking control system is mounted. FIG. 4 is a schematic view showing a tracking servo-signal generating apparatus which performs the tracking to the groove. The tracking servo-signal generating apparatus includes a two-divided PD and a subtracter 21. The reflected light from the optical disk has an intensity distribution of bilateral symmetry when the beam is scanned in the center of the groove in the disk radial direction. However, when the beam is shifted from the center of the groove, one of the bilateral intensity distributions is decreased and the other is increased. Therefore, when a difference signal of the two-divided PD is observed, the output becomes zero in the case where the beam is located in the center of the groove, and the output becomes the waveform shown on the right side of FIG. 4 when the beam crosses the plural grooves. This signal is used for the generation of the tracking servo signal.

Then, the tracking control in the reproduction-only apparatus will be described. There is no groove in the reproduction-only disk, but the plural pits are formed. Further, because the shape of the pit is formed so that a higher priority is placed on quality of a sum signal, it is difficult that the tracking servo signal is obtained by the difference signal using the PP method. FIG. 5 is a schematic view showing a tracking servo-signal generating apparatus of the reproduction-only apparatus. The tracking servo-signal generating apparatus adopts the DPD method. The PD having four light-detection areas is used in the DPD method. When the light deflected from the pit is observed, the signals whose phases are substantially equal to one another are output from the PD elements A, B, C, and D in the case where the beam is scanned in the center of the pit or the mark. On the other hand, as the beam diverges from the pit center, the phases of the signals outputted from A and D and the signals outputted from B and C are gradually shifted. Accordingly, when the amount of phase shift is detected, the divergence from the track center can be detected.

In the apparatus shown in FIG. 5, the output signals of the elements A and D in the PD are added by an adder 22a, and the output signals of the elements B and C are added by an adder 22b. In both addition signals, an amplitude component of a shorter mark is amplified by equalizers (EQ) 23a and 23b and binarized by level comparators 24a and 24b. Further, a phase difference between the addition signals of the elements A and D and the addition signals of the elements B and C is detected to generate the tracking servo signal by a phase comparator 25, low-pass filters 26a and 26b, and a subtracter 27 as shown in lower right of FIG. 5. Thus, in the DPD type of tracking servo-signal generating circuit of the reproduction-only apparatus, it is necessary that a temporal fluctuation in signal is detected. Therefore, the reproduction-only apparatus cannot perform the tracking control to the optical disk having the structure in which constant-level signals are always output when the groove is scanned.

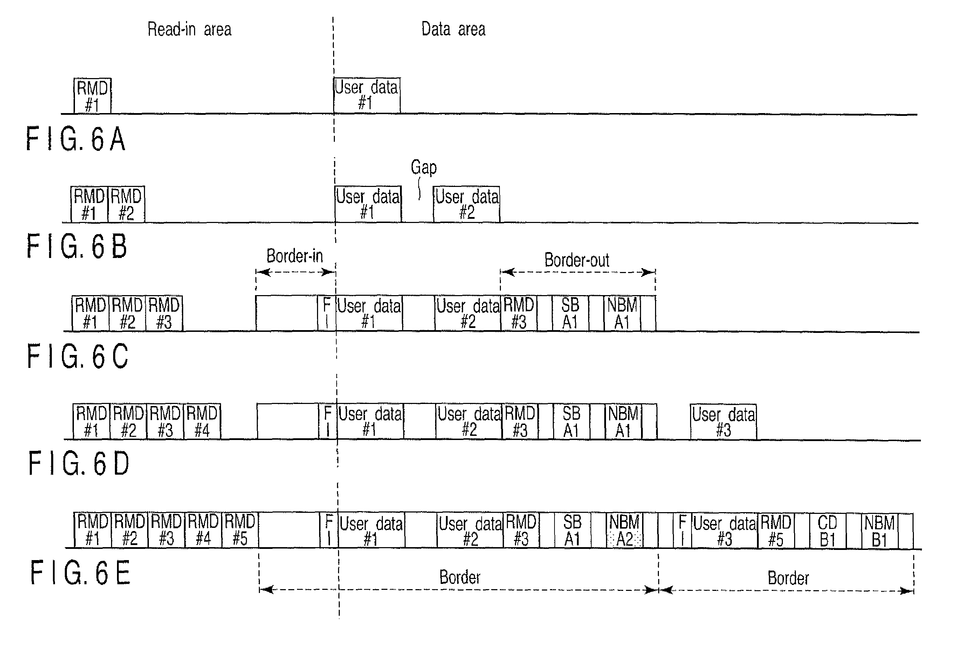

Then, referring to FIG. 6, a procedure of recording the information in the optical disk with the optical disk recording apparatus will be described. The left side of FIG. 6 shows the inner side of the disk, and the right side of FIG. 6 shows the outer side of the disk. The groove is previously formed in the read-in area and the data area of the optical disk in which the information can be recorded, and the address information is recorded in the groove. Accordingly, the recording apparatus can obtain the access to the desired position of the disk according to the address information.

As shown in FIG. 6A, when the optical disk apparatus records the user data in the data area by according to a request from a user, the recording position information of the user data is recorded as recording management data (RMD) in a recording management zone of the read-in area. When the data is recorded in the next time, as shown in FIG. 6B, the already-existing RMD # 1 is reproduced, and user data # 2 is recorded so as not to overlap the user data # 1.

In the optical disk at this stage, since a gap (data absent area) exists between the user data areas in which the mark is recorded, the reproduction cannot be performed by the reproduction-only apparatus in which the tracking can be performed only to the mark.

Therefore, in order to ensure compatibility with the reproduction-only apparatus, the recording apparatus can perform a closing process. FIG. 6C shows the disk state in which the closing process is performed. In the closed disk, the gap between the user data areas is padded with a dummy recording mark. In the closed disk, subsequent to the user data, the last recording management information (RMD # 3) is copied, an NBM (A1) which is the information indicating the end of the recording mark is recorded, and the information SB (A1) about the position (address) of the NBM is recorded in front of the NBM (A1). An area recorded subsequent to the user data is referred to as border-out. Further, format information (FI) is recorded in the read-in area immediately in front of the user data, and the RMD # 3 is recorded in the read-in area.

The format information (FI) immediately in front of the user data also serves as the border-in area. It is possible that the format information is provided while being in contact with the user data as described above, or it is possible that the format information is provided while separated from the user data as shown in FIG. 1. When the format information is provided while separated from the user data, the dummy data is recorded between the format information and the user data so that the DPD type tracking is performed.

The area between the border-in and the border-out is referred to as the border. The information such as the end position of the border is recorded in the format information and the RMD # 3. Accordingly, the border state whether the information can additionally be written or not, the border start position, and the border end position can be known by reproducing the format information or the RMD # 3. The information indicating that the next border does not exist is recorded in the NBM. When the NBM is discovered, the optical disk apparatus ends the reproduction at that time. Thus, in the closed disk, since the recording marks are continuously formed from the border-in to the border-out, the reproduction is enabled in the reproduction-only apparatus.

When the next information is further recorded, as shown in FIG. 6D, the user data # 3 is recorded while separated from the border zone with a predetermined interval. When the closing process is performed again in order that the user data # 3 can be reproduced by the reproduction-only apparatus, as shown in FIG. 6E, the border-in is formed immediately in front of the user data # 3. Similarly the border-out is formed in the above-described manner. However, in this state, because the reproduction is ended at the time when the apparatus discovers an NBM (A2), the NBM information is erased in the closing process from the second time.

When a failure of NBM recording is confirmed by reproduction evaluation operation after the NBM is recorded (not shown), the SB and the NBM are recorded after the predetermined amount of dummy data is recorded subsequent to the usual border-out. Further, a flag indicating that the NBM is re-recorded and the position information on the re-recorded information are recorded as the RMD.

In this case, the RMD is updated in the read-in area. However, it is also possible that the RMD is further recorded in a part of the data area. Namely, for example, it is possible that the RMD is recorded in the area between the user data # 1 and the user data # 2.

Then, a procedure of reproducing the information from the optical disk with the reproduction-only apparatus will be described.

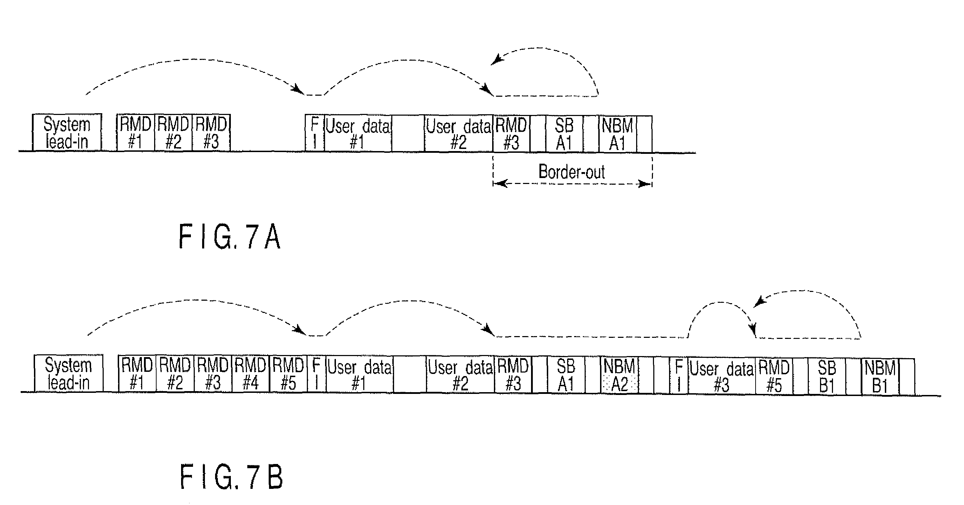

In the DPD type of reproduction-only apparatus, since the access to the recording management zone RMD cannot be performed in the read-in area shown in FIG. 6, the disk is reproduced in the procedure shown in FIG. 7A. In the embodiment, the reproduction-only apparatus searches and reproduces the user data recorded in the end of the accessible area of the optical disk, i.e. the latest information.

As shown in FIG. 7A, the reproduction-only apparatus initially reads the front-end position of the format information FI by reproducing the system read-in area in which the recording is performed by the embossing pits. Then, the reproduction-only apparatus determines the final position of the user data # 2 in the self-border from the format information, and the reproduction-only apparatus obtains the access to the final position of the user data # 2. Then, the reproduction-only apparatus reads the SB and the NBM. When the NBM is normally reproduced, because the position is the readable final position, the trace is ended, and the reproduction-only apparatus returns to the front end of the last user data # 2 to reproduce the latest information.

Referring to FIG. 7B, the case in which the plural borders exist will be described below. In the case where the plural borders exist, similarly the system read-in, the format information FI, the final position of the user data in the self-border are sequentially reproduced. After the SB (A1) is read, when the information indicating the final recording position of the recording data is erased like the NBM (A2), the NBM recording address being recorded at the specified address in the SB (A1), the reproduction-only apparatus determines that the next border exists, and reproduces the format information FI of the next border. In the same manner, the reproduction-only apparatus searches the NBM (A1) including the information indicating the final recording position of the recording data to determine the final recording position, and reproduces the user data # 3 based on the RMD # 5.

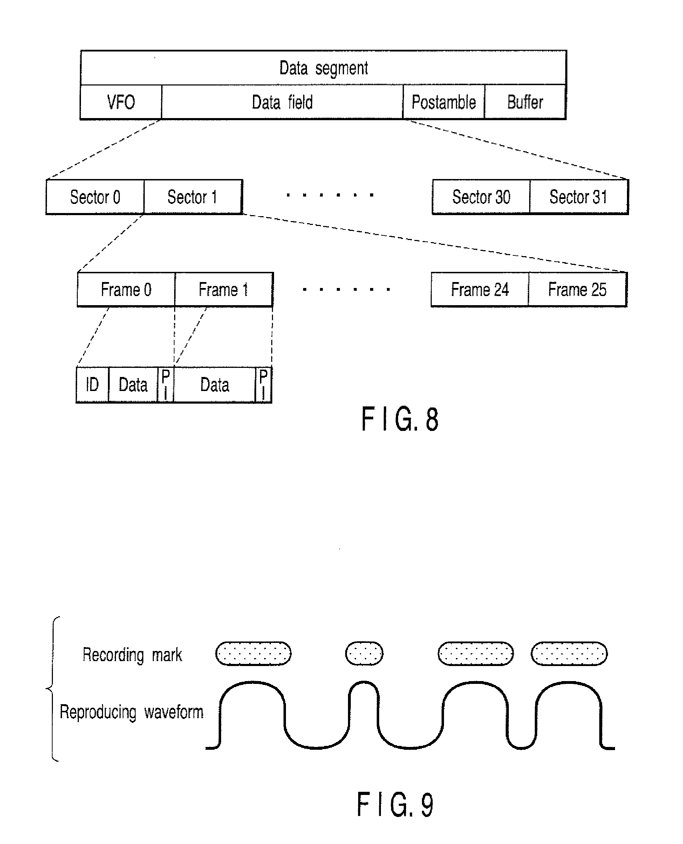

Referring to FIG. 8, a data structure of the data recorded in the optical disk will be described below.

In the optical disk, usually the recording is performed in units of a data segment. The data segment may include a VFO which is an introduction part, a postamble indicating the end of the user data, a buffer, and the like besides the user data. The user data is stored in a data field. The data field is divided into plural sectors, and the sector is divided into plural frames. A sector ID, by which the reproduction-only apparatus reads data attribute and address, and a correction code (PI) for an error correction process are recorded in a frame 0 in addition to the user data. The user data and the correction code (PI) are recorded in other frames. The information of one ECC BLOCK which is one unit of the error correction is stored in the data field. In the case of the usual reproduction-only apparatus, when no piece of information is recorded in the data field, as described above, the tracking control cannot be performed, and the sector ID cannot be read.

Then, a method of recording and detecting the NBM will be described.

The following methods can be cited as the method of recording the information indicating the final recording position in the NBM.
A) A predetermined series of particular patterns is recorded.
   In order to simplify the detection of the NBM, there is a method of recording the predetermined particular pattern, which is an embodiment of the invention. When the particular patterns are continuous, generally there is the problem that the DPD type tracking servo signal is not output or the quality is decreased. However, adoption of one of the following methods or the plural methods allows the quality of the DPD signal to be secured: (a) the code used in the particular pattern is limited to the same run-length as for the usual data area, (b) at least two kinds of code are used, and (c) the NBM is limited to a width not more than one turn of the track, and the usual modulation data area is provided in the adjacent track. At this point, it is desirable that the width of the NBM is about one ECC BLOCK or two ECC BLOCKS.
B) As with the user data, the information indicating the final recording position is recorded in the data field.
C) The information indicating the final recording position is recorded in ID.

In the cases of the methods B) and C), it is possible that the information indicating the final position (particular pattern) is recorded across one entire ECC BLOCK. Further, it is possible that the information indicating the final position and the dummy data to which the usual modulation is performed are alternately recorded at intervals of one sector or one frame.

Then, the method of erasing the NBM will be described.

In the write-once disk, the recording layer is formed based on the premise that only one-time recording is performed. Therefore, in the case where the data is overwritten, the data located in the overwritten portion is broken and the data cannot be reproduced. In the invention, while the information is broken by overwriting the pattern shown below, the tracking signal such as the DPD signal can be maintained.

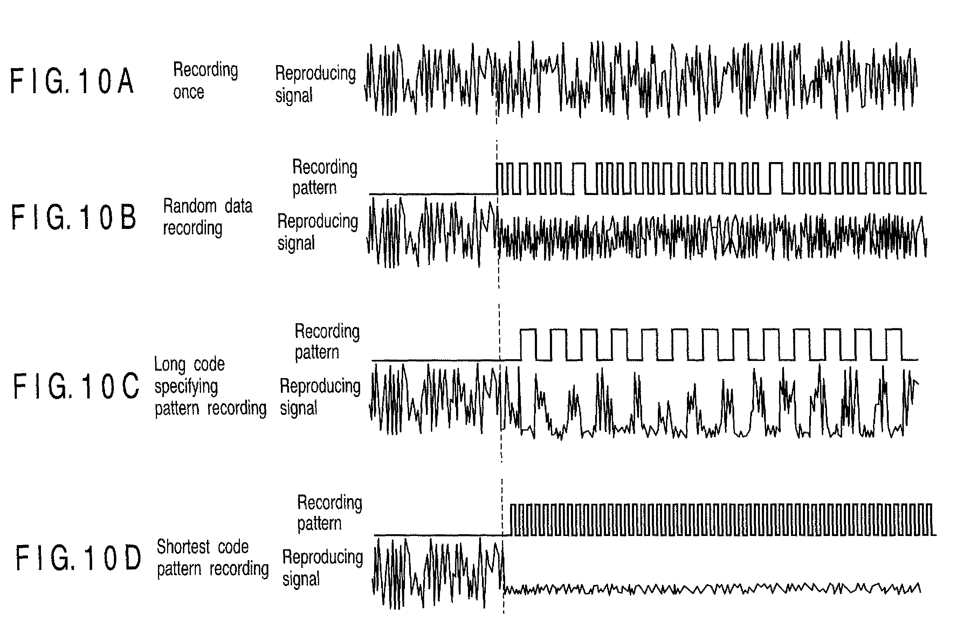

Erasing method A) FIG. 10A shows a reproducing waveform pattern of the NBM recorded in the write-once optical disk. In FIG. 10B, the dummy data to which the same modulation as for the main data is performed is overwritten on the disk in which the NBA is recorded as shown in FIG. 10A. In the case where a long space exists in the data during the overwriting, locally the overwriting is not performed in the long space, and the previous signal remains. Usually the long space always emerges in a constant probability in the modulated signal. Therefore, in the long space, the information is not overwritten and the DPD signal is normally generated. A frequency band of the tracking servo system in which the DPD signal is used is sufficiently low when compared with the recording information reproducing system, so that the normal operation can be performed even if the signal is intermittently generated. On the other hand, in the portions except for the long space, the recording signal is overwritten, so that the information cannot be read. Namely, the information is completely erased.

Erasing method B) As shown in FIG. 10C, the particular pattern is overwritten. The particular pattern includes the code having the run-length longer than a half of the maximum run-length in the modulation range used in recording the user data, and the run-length of the code exceeds one-third of the run-length of the whole one pattern. For example, in the case where the main data is modulated by the (1,10) RLL modulation, the pattern of 10T-10T-4T is used as shown in FIG. 9. The pattern includes the odd-number codes, so that the mark of 10T, the space of 10T, the mark of 4T, the space of 10T, the mark of 10T, and the space of 4T are sequentially recorded. In the case where the overwrite is performed using the pattern of 10T-10T-4T, the DPD signal can be obtained in the space of 10T even after the overwrite. Therefore, the DPD signal can be obtained within the range of 5/12 (= 10T/24T) of the erasing area, and the tracking can be securely performed after the overwrite.

Erasing method C) As shown in FIG. 10D, the overwrite is performed on the continuous pattern of the shortest run-length in the modulation range used in recording the user data. For example, in the case where the main data is modulated by the (1,10) RLL modulation, the continuous signal of 2T is recorded. In this case, the original recording signal is completely broken, and the amplitude becomes smaller in the reproducing signal after the overwrite. Accordingly, because the quality of the DPD signal is remarkably decreased, the overwrite cannot be performed in the long area. However, the DPD signal can be secured by limiting the overwrite range as described later.

Then, the overwrite range will be described.

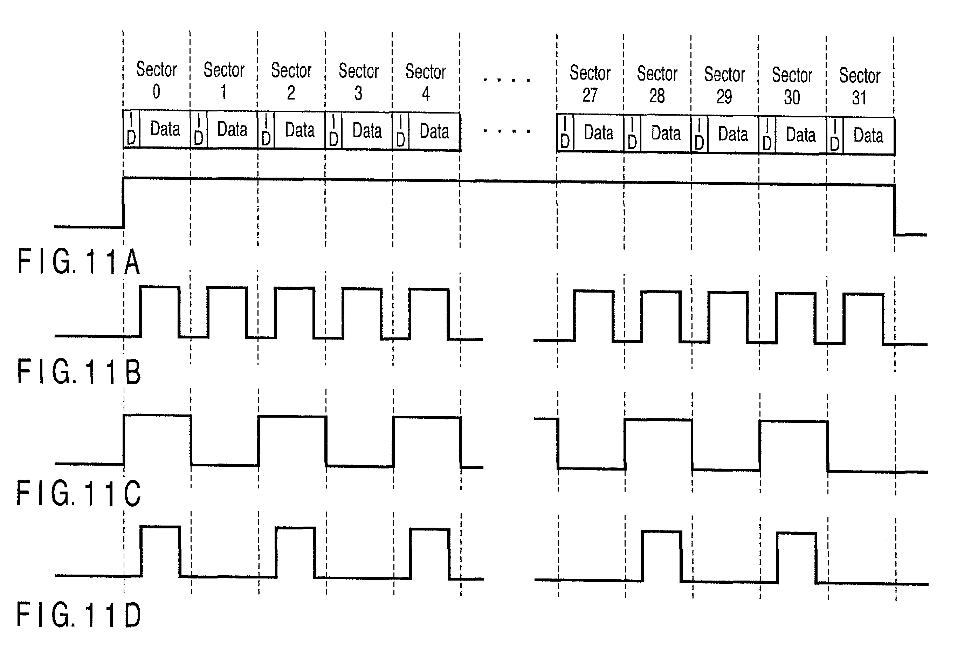

Range a) As shown in FIG. 11A, all the data segments including key information are overwritten.

The original information can securely be erased. However, in the case of the erasing method C), since the DPD signal is not output over the long range, it is not preferable that the range a) is used.

Range b) As shown in FIG. 11B, the data portion of each sector is overwritten.

Because the ID includes the address information and the attribute information on the data, by leaving the ID, the address can be obtained or the data attribute can be confirmed. Accordingly, the address search can stably performed after erasing the overwrite.

Range c) As shown in FIG. 11C, the sectors are overwritten at intervals of one sector.

Usually, because the recording and non-recording are controlled in units of a sector, when the control is performed in sector units, the overwriting process becomes simplified. Further, the ID remains at intervals of one sector and the address information can be obtained, so that the address can stably be reproduced by a complementation process. Even if the erasing method C) is adopted, the decrease range is shortened in the one-time DPD signal, so that the tracking can be relatively stably performed.

Range d) As shown in FIG. 11D, the data portions of the sectors are overwritten at intervals of one sector.

As with the range b), sector ID can be read. In addition, even if the erasing method C) is adopted, the decrease range is shortened in the one-time DPD signal, so that the tracking can be relatively stably performed.

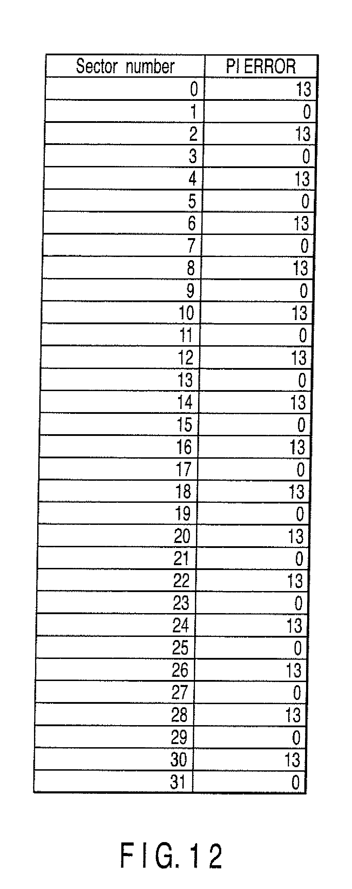

FIG. 12 shows a PI error when the information recorded in the sector is erased at intervals of one sector like FIGS. 11C and 11D. For example, the numbers of PI errors 13 and zero are alternately generated such that the maximum number of PI errors is 13 in the sector 0 in which information is erased and the number of PI errors is zero in the sector 1 in which the previous information remains. It is easily recognized that the optical disk apparatus is the NBM in which the sector is erased by the error pattern.

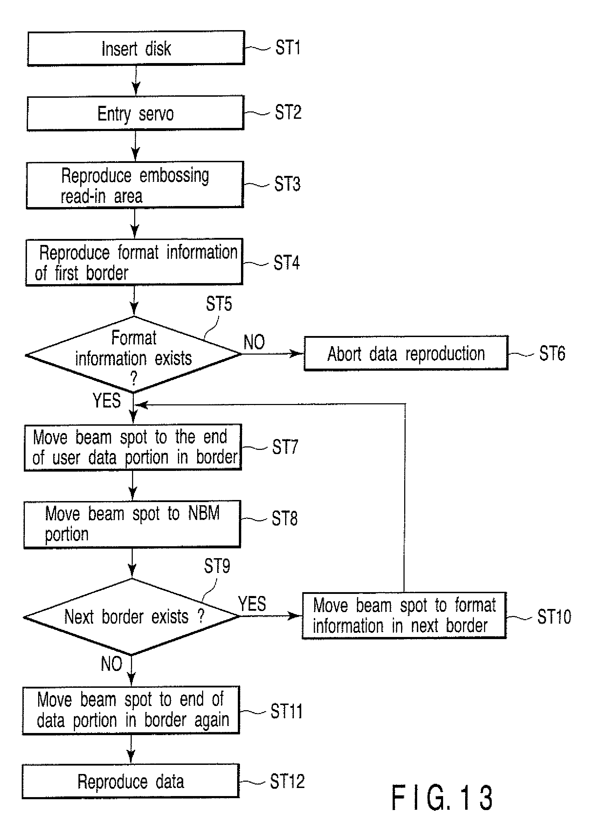

Referring to FIG. 13, a procedure of reproducing the data after the disk is inserted into the reproduction-only optical disk apparatus will be described below. In the write-once disk, usually the latest information is recorded in the tail end of the user data, so that the disk reproduction is started from the tail-end search.

When the disk is inserted into the optical disk apparatus (ST1), the servo such as the focusing servo is enabled to focus the beam spot on the information recording surface of the optical disk (ST2).

Then, the information in the embossing read-in area is reproduced (ST3). At this point, the kind of the disk is determined. When the disk is the write-once disk according to the invention, subsequently the format information in the read-in area is reproduced (ST4).

When the format information is confirmed, the beam spot is moved to the end of the user data portion of the border based on the format information (ST7). When the format information is absent, since the disk cannot be reproduced, the disk reproduction is aborted (ST6).

Once the beam spot is moved to the end of the user data portion, subsequently the border-out is reproduced to confirm the information on the NBM (ST8).

When the information indicating the end of the recording data is recorded in the NBM, since the border is the last border, the beam spot is returned to the last user data portion to reproduce the information (ST11 and ST12).

When the information indicating the end of the recording data is erased in the NBM by the overwrite, since the next border is present, the beam spot is moved to the format information in the next border (ST10). Then, the same procedure is repeated until the NBM in which the information indicating the end of the recording data is recorded is discovered.

The above descriptions are only the embodiments of the invention. The apparatuses and methods of the invention are not limited to the above descriptions, and various modifications can be realized. Such modifications should also be included in the invention. Further, the invention should also include the apparatuses or methods which are formed by appropriately combining the constituents, functions, features, and methods and steps in each embodiment.

## Claims

1. An information recording and reproducing apparatus **characterized by** comprising:
an optical pickup which focuses a laser beam onto an information recording surface of an optical disk to record and reproduce information;
an unit which records first user data on a write-once optical disk using the optical pickup, the information being additionally written on the write-once optical disk;
an unit which records first final recording position information (NBM) which indicates an end position of the recorded information in the outside of the first user data using the optical pickup;
an unit which records second user data on the write-once optical disk; and
an overwriting unit which overwrites a predetermined pattern over the first final recording position information (NBM).

2. The information recording and reproducing apparatus according to claim 1, **characterized in that** the information recorded on the write-once optical disk comprises a plurality of sectors, the first final recording position information (NBM) includes a plurality of sectors, and the overwriting unit overwrites the predetermined pattern in the first final recording position information (NBM) in units of a sector.

3. The information recording and reproducing apparatus according to claim 2, **characterized in that** the overwriting unit overwrites the predetermined pattern at intervals of one sector of the plurality of sectors included in the first final recording position information (NBM).

4. The information recording and reproducing apparatus according to claim 1, **characterized by** further comprising an unit which records first address information (SB) between the first user data and the first final recording position information (NBM), the first address information (SB) indicating a position where the first final recording position information (NBM) is recorded.

5. The information recording and reproducing apparatus according to claim 1, **characterized in that** the predetermined pattern is limited to the same run-length as for a modulation method for modulating the user data, the predetermined pattern being overwritten in the final recording position information (NBM).

6. A method of recording information by focusing a laser beam on an information recording surface of a write-once optical disk in which the information is additionally recorded, the method **characterized by** comprising:
recording first user data on the optical disk;
recording first final recording position information (NBM) which indicates an end position of the recorded information in the outside of the first user data;
recording second user data on the write-once optical disk; and
overwriting a predetermined pattern over the first final recording position information (NBM).

7. An information reproducing method in which user data recorded on an optical disk is reproduced, the optical disk including a system read-in area recorded on a disk innermost radius side by an embossing pit, format data track, the user data, management data to manage the user data, and final recording position information (NBM) which indicates an end position of recorded information, the format data, user data, management data and final recording position information being recorded in groove track, the information reproducing method **characterized by** comprising:
reading the system read-in area to detect a position where the format data is recorded (ST3);
reading the format data to determine a rear-end position of an area where the user data is recorded (ST4);
reproducing data subsequent to the rear-end position to confirm the final recording position information (NBM) (ST9);
reading format information on the next user data recorded when the final recording position information (NBM) is erased by the overwrite,
wherein the determining step, the confirming step, and the reading step are repeated until the final recording position information (NBM) is detected.

8. An optical disk on which information is recorded by a laser beam, the optical disk **characterized by** comprising:
an embossing read-in area in which information is recorded by embossing pits;
a read-in area which is provided on the outside of the embossing read-in area, and in which the information is recorded by the laser beam; and
a data area which is provided on the outside of the read-in area, and in which user data is recorded by the laser beam,
wherein the data area comprises final recording position information (NBM) which indicates an end position of recording information in the end of the recorded information.
